# EUROPEAN PATENT SPECIFICATION

(11) **EP 4 214 146 B1**
(45) Date of publication and mention of the grant of the patent: **28.08.2024**
(21) Application number: 20824625.6
(22) Date of filing: 25.09.2020
(51) Int. Cl.: B65G 25/04, B05B 13/02

(54) **IMPROVED SYSTEM FOR HANDLING PIECES TO BE PROCESSED**
VERBESSERTES SYSTEM ZUR HANDHABUNG VON ZU VERARBEITENDEN TEILEN
SYSTÈME AMÉLIORÉ DE MANIPULATION DE PIÈCES À TRAITER

(30) Priority: 18.09.2020 IT 202000022087
(43) Date of publication of application: 26.07.2023
(73) Proprietor: Finiture Srl, 35020 Saonara (PD) (IT)
(72) Inventor: SEDINO, Giovanni, 35020 Saonara (PD) (IT)
(74) Representative: Rocchetto, Elena
(86) International application number: PCT/IB2020/058982
(87) International publication number: WO 2022/058781

(56) References cited:
- EP-A1- 0 279 621
- EP-B1- 0 279 621
- AU-A- 1 816 070

## Description

The present patent concerns the systems for handling pieces to be painted, subjected to surface treatments or processed in general, wherein said pieces have a mainly plane geometrical structure, and more specifically it concerns an improved system for handling pieces to be processed.

Systems designed to handle pieces to be subjected to surface treatments, for example to be polished, padded, painted or the like are known.

Said pieces have a mainly plane geometrical structure, that is, they have two dimensions which prevail with respect to the third dimension. For example, said systems are used for handling elements such as doors and windows, or panels in general.

Said systems are usually provided with a structural frame designed to support a plurality of piece-holding bars, meaning bars which are arranged horizontally and parallel to one another, from which the pieces to be processed hang.

Said pieces are hung in such a way that they lie on a vertical plane defined by the direction of the bar.

The structural frame comprises means for handling said bars which are translated orthogonally with respect to the direction on which they lie.

The so-called pilgrim process conveyors are known, which are operated by pneumatic or hydraulic or mechanical actuators and provide for moving all the pieces at the same time, carrying out the translation by a fixed distance, at constant time intervals imposed by the slowest work station present along the line.

Handling systems are known which accumulate the piece-holding bars by means of a series of teeth moved continuously by one or more chains.

The so-called "power & free" or two-rail handling systems are also known, which are constituted by an upper rail for the continuous sliding movement of a traction chain and a lower rail for the sliding movement of the carriages transporting the pieces. A system showing the preamble of claim 1 is known from AU1816070A.

A drawback of the known systems lies in that the pieces or the bars are loaded in the system with a loading speed that is determined by the processing steps performed upstream of the system.

Vice versa, the processing steps performed downstream of the system have a different timing, for example are slower, so that the bars must remain inside the system for a variable lapse of time.

Thus, the system serves as a storage area for said bars.

At present, as already mentioned, the known handling systems can only move the bars from a loading point to an unloading point, and it is not possible to reduce the empty spaces left between the bars themselves. The resulting drawback is constituted by the fact that the capacity of the system is not exploited completely.

The subject of the present patent is an improved system for handling pieces to be processed.

The present patent intends to provide a system capable of controlling the movement of the piece-holding bars for the purpose of accumulating or distributing them.

More specifically, the new improved system according to claim 1 moves the piece-holding bars selectively, moving and accumulating the bars progressively from the first one to the last one, that is, moving the bars selectively and progressively independently of their mutual distance. In this way, the system progressively accumulates all the bars until reaching its maximum capacity, eliminating any empty space between the bars loaded in the system. This is possible thanks to the alternate handling system which is described and claimed here below.

The main parts of the new system comprise the following:
- a bearing structure constituted, for example, by a metal frame;
- two or more piece-holding bars arranged parallel to one another and to a horizontal direction of reference; each bar in turn comprises coupling means for hanging one or more pieces to be processed and slides with respect to said bearing structure in a horizontal translation direction which is orthogonal to said horizontal direction of reference;
- at least one handling structure suited to move said bars with respect to the bearing structure, wherein said handling structure selectively moves one or more of said bars in said translation direction;
and wherein said handling structure in turn comprises:
- at least one bar thrusting tooth which slides along a sliding guide oriented in said translation direction, said at least one tooth oscillating with respect to said sliding guide between at least one first position of non-interference and a second position of interference;
- means designed to translate said at least one bar thrusting tooth along said at least one sliding guide with an alternating motion in the two directions;
- at least one coupling section integral with said at least one sliding carriage and with said piece-holding bar, said coupling section being provided with at least one seat for coupling said at least one bar thrusting tooth.

The following movements are performed to translate said at least one piece-holding bar in said translation direction with respect to said handling bar:
- said at least one bar thrusting tooth is translated in one direction along said sliding guide, until reaching a position corresponding to the piece-holding bar that must be translated;
- said at least one bar thrusting tooth is coupled with said coupling section that is integral with said piece-holding bar to be translated;
- said at least one bar thrusting tooth is translated further along said sliding guide in the opposite direction, thrusting said piece-holding bar coupled with it to the desired final position.

The bar thrusting tooth is coupled and released automatically through simple interference with said coupling section; in fact, said coupling section and/or said bar thrusting tooth are configured with at least one interference surface generically inclined with respect to the horizontal sliding direction of the bar thrusting tooth, so that when said tooth, which is normally arranged in said position of interference, slides on said coupling section, it is lifted and then lowered again at the level of said coupling seat.

Then, sliding in the opposite direction, said tooth is coupled with said coupling section and, translating even further, it thrusts the piece-holding bar making the corresponding carriage slide with respect to the bearing structure.

The handling structure moves the teeth with an alternating motion, in one direction to reach the bar to be moved and in the opposite direction to become coupled with each bar and move it to the accumulation position.

The bar is moved in successive steps that are determined by the stroke of each single tooth. In fact, all the teeth, as already explained, perform an alternating motion with a stroke which preferably exceeds the distance between them. In this way, each tooth moves a bar by a step between the position in which it grasps the bar and the position in which it releases it, where it is then coupled with the successive tooth, and so on.

Said handling structure preferably comprises a plurality of said bar thrusting teeth, arranged at a modular distance from each other, so that several piece-holding bars can be selectively grasped.

The system can thus progressively grasp all the bars loaded therein, positioning them near the already accumulated bars, that is, eliminating the empty spaces created between the bars during the loading step.

The distance between the bar thrusting teeth is fixed and for example, and preferably, is equal to the preferred minimum distance between said piece-holding bars.

Said handling structure is used in said system to accumulate several piece-holding bars, thus maximizing the capacity of the system itself.

The system may also comprise two or more of said handling structures arranged along the bearing structure and operating in a synchronized manner, in such a way as to grasp said piece-holding bars at several points distributed along their length and thrust them.

The characteristics of the new system are better clarified in the following description with reference to the drawings which are attached hereto by way of non-limiting example.

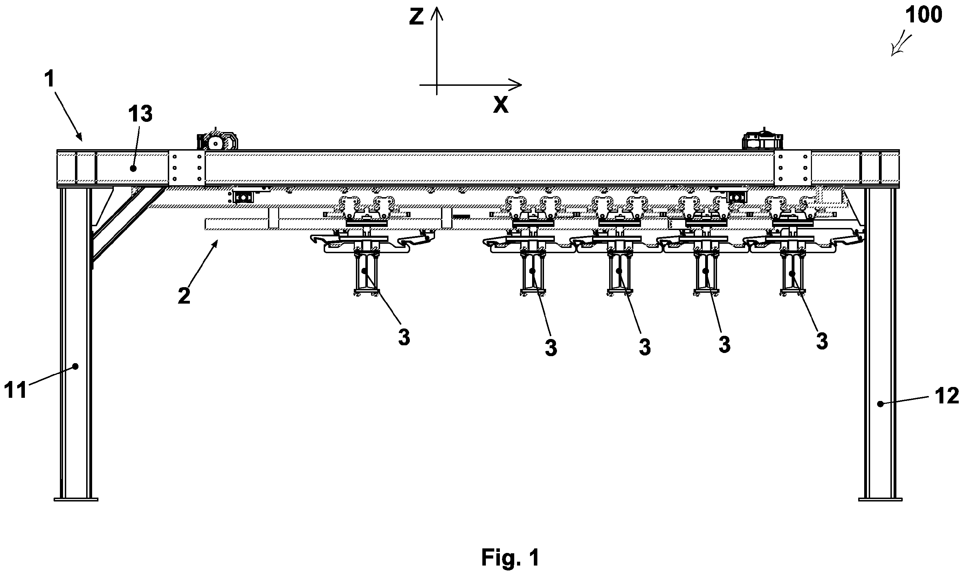

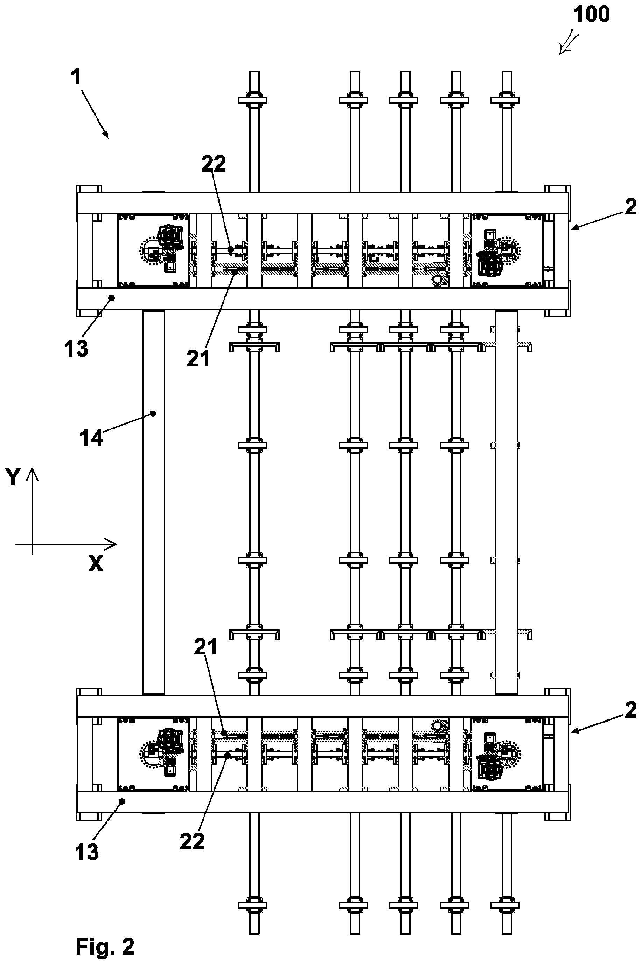

Figure 1 shows a front view of the system (100), while Figure 2 shows a plan view of the system (100) of Figure 1.
Figure 3 shows a detail of Figure 1, in which it is possible to observe the handling structure (2) designed to move the piece-holding bars (3).

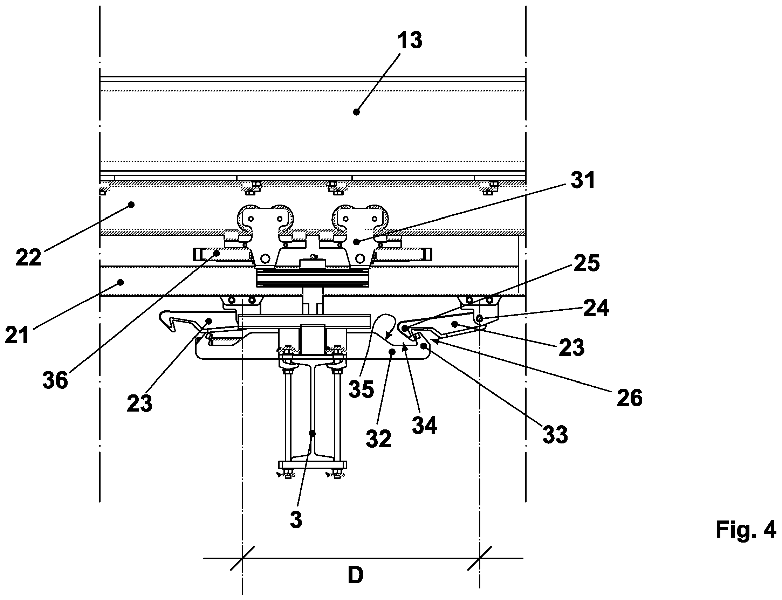

Figure 4 shows the detail shown in Figures 1 and 3, further enlarged, in which it is possible to observe the piece-holding bar (3) with the respective carriage (31) that slides on a sliding guide (22).
Figure 5 shows a three-dimensional view of part of the handling structure (2), with bar thrusting teeth (23), motor (27) for the sliding movement of the bar thrusting teeth (23) and supports (210) for fixing the handling structure (2) to the bearing structure (1) of the system (100).
Figure 6 shows a detail of Figure 5, in which it is possible to observe two bar thrusting teeth (23), said motor (27) and a rack (281) for the sliding movement of said teeth (23) along a teeth holding bar (21).
Figure 7 shows a three-dimensional view of a piece holding bar (3) with two respective sliding carriages (31) and two coupling sections (32) for coupling one of said bar thrusting teeth (23).
Figure 8 shows a detail of Figure 7, in which it is possible to observe a sliding carriage (31) for a piece-holding bar (3) and a coupling section (32) for coupling one of said bar thrusting teeth (23).
Figures 9, 10 and 11 schematically represent the operation of the new system (100), in which several piece-holding bars (3) are progressively accumulated, thus eliminating the empty spaces created between the bars (3) themselves during the loading step.

The invention is an improved system (100) designed for handling pieces having a mainly plane geometrical structure, such as panels or doors and windows.

The system (100) comprises a bearing structure (100) constituted, for example, by a metal frame made up of vertical uprights (11, 12) and horizontal crosspieces (13, 14). The system (100) handles a plurality of piece-holding bars (3) arranged in a horizontal direction of reference (Y) and parallel to one another.

Each piece-holding bar (3) comprises, for example, an H-shaped metal section bar with coupling means distributed thereon, said coupling means being suitable for hanging the pieces to be processed, which are not shown in the figures.

Each piece-holding bar (3), furthermore, is constrained so that it slides along at least one sliding bar (22) integral with said bearing structure (1) and oriented in a horizontal translation direction (X) orthogonal to said horizontal direction of reference (Y) on which the bars (3) themselves lie.

For example, each bar (3) comprises one or more sliding carriages (31), in turn constrained so that they slide on said sliding bar (22).

The system (100) comprises at least one handling structure (2) for moving said piece-holding bars (3) with respect to said bearing structure (1).

In the example shown in the figures, the system (100) comprises two of said handling structures (2) distributed along the direction (Y) on which said piece-holding bars (3) lie.

Said handling structures (2) are configured to selectively translate said piece-holding bars (3) parallel to said horizontal translation direction (X).

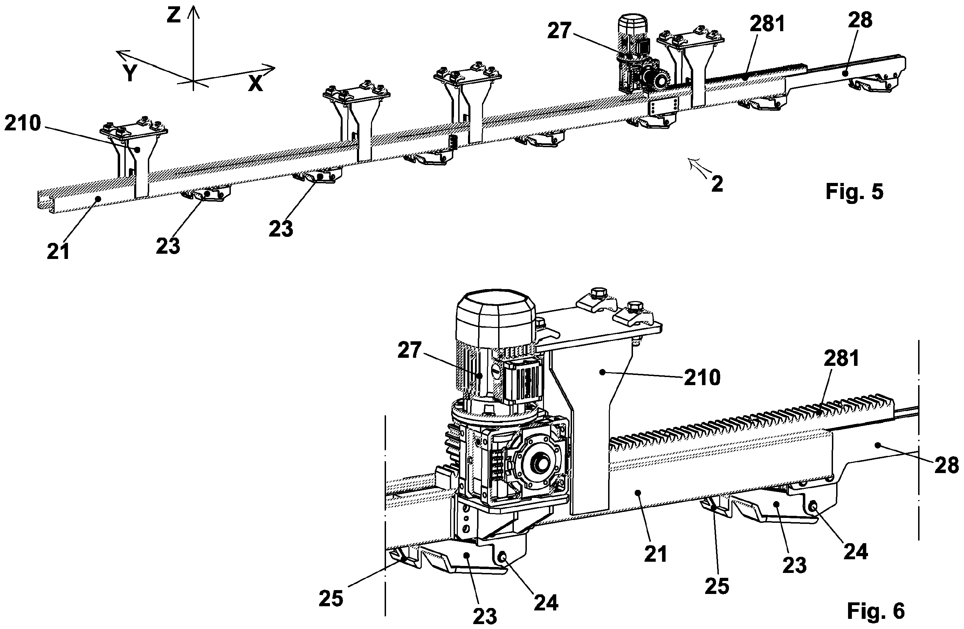

Said handling structure (2) in turn comprises at least one sliding guide (21) arranged in said translation direction (X) and directly or indirectly constrained to said bearing structure (1), for example by means of supports (210) shown in Figure 5, so that it is integral with the bearing structure (1) itself.

A plurality of bar thrusting teeth (23) slide on said at least one guide (21), said teeth (23) being spaced from one another by a fixed distance (D) which is equal to the minimum distance between the piece-holding bars (3) when these are accumulated in said system (100).

For example, said minimum distance (D) between the bars (3) is defined by the presence of spacers (36) between the bars (3) themselves.

Each one of said bar thrusting teeth (23) is hinged to a rod (28) which slides in said guide (21) and oscillates around a pin (24) oriented, for example, in said direction (Y) on which said piece-holding bars (3) lie.

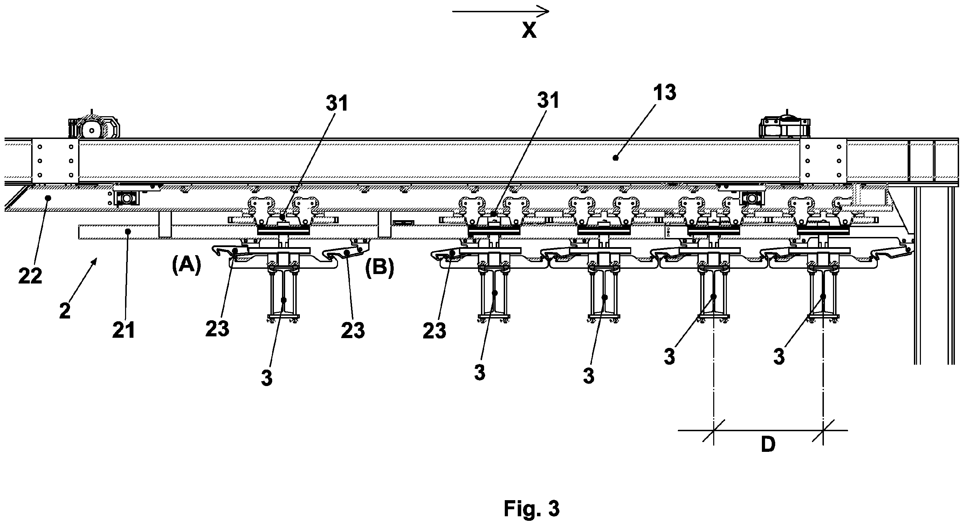

More specifically, each tooth (23) oscillates with respect to said sliding guide between at least one first raised position of non-interference (A) and a second lowered position of interference (B) which are visible, for example, in Figure 3, and vice versa.

Each one of said teeth (23) comprises a shaped end (25), for example a hook-shaped end, suitable for coupling with a coupling section (32) which is integral with a piece-holding bar (3), as described and claimed below.

Said handling structure (2) comprises, for example, at least one motor (27) mechanically connected to said bar (28) holding the teeth (23), for example by means of the rack (281), and suited to set said rod (28) and therefore said teeth (23) sliding with respect to said guide (21).

According to the invention, however, other pneumatic or hydraulic or mechanical devices can be used to move the teeth.

More specifically, said teeth (23) perform an alternating translational motion in the two directions, with a stroke which preferably exceeds said distance (D) between them.

Each of said piece-holding bars (3) is constrained to one or more coupling sections (32) for coupling one of said bar thrusting teeth (3). In greater detail, the number and distribution of said coupling sections (32) constrained to each single piece-holding bar (3) correspond to the number and distribution of said handling structures (2), since each of said coupling sections (32) must be grasped and thrust by one of said bar thrusting teeth (23) of said handling structures (2).

Said coupling section (32) comprises at least one seat (34) for coupling said at least one bar thrusting tooth (23).

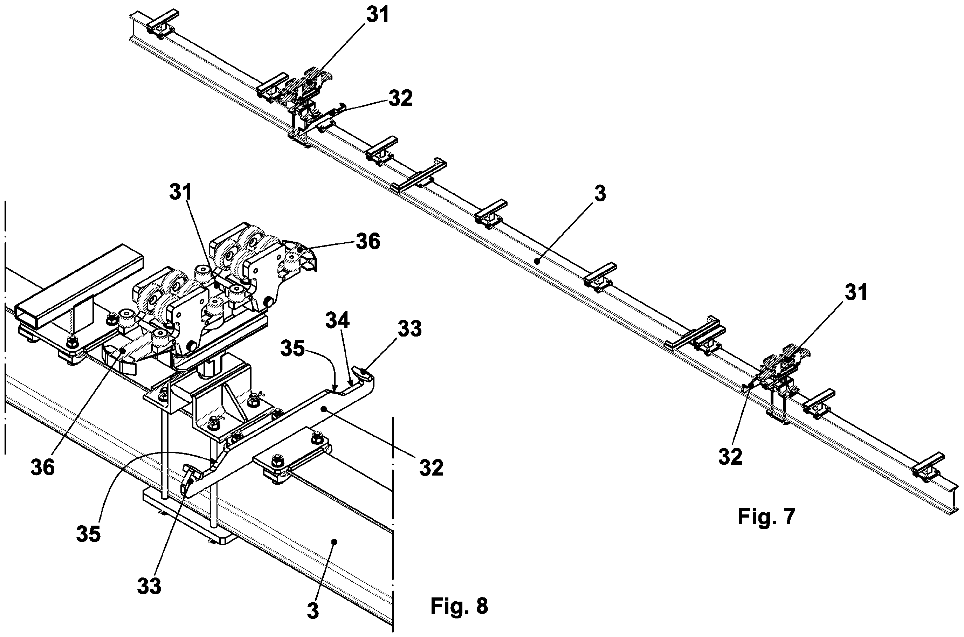

In a preferred solution shown in detail in Figure 8, said coupling section (32) comprises at least one end (33) folded upwards and defining said coupling seat (34) for coupling with the corresponding shaped end (25) of said bar thrusting tooth (23).

Said coupling section (32) and said bar thrusting tooth (23) are also shaped so as to feature generically inclined interference surfaces (35, 26) which are suited to slide on each other, in such a way that when said tooth (23), normally arranged in said lowered position of interference (B), slides on the section (32) in one direction, it is lifted up in said position of non-interference (A) and lowered again at the level of said coupling seat (34).

Sliding in the opposite direction, said tooth (23) is coupled with said coupling section (32) and, translating even further, thrusts the piece-holding bar (3) by making the corresponding carriage (31) slide along said sliding bar (22) by a distance corresponding to the stroke of the tooth (23) itself.

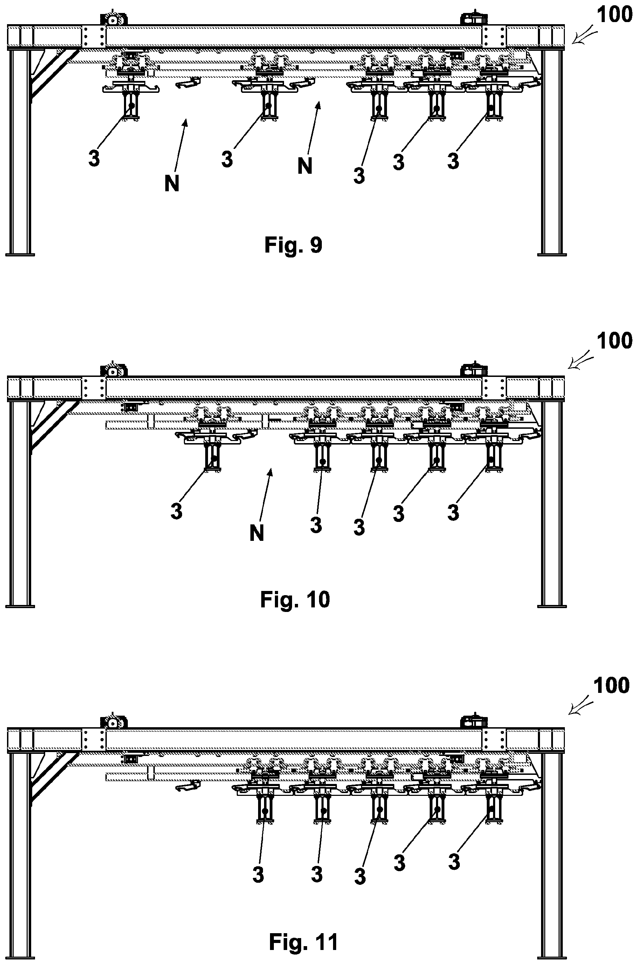

As schematically shown in Figures 9, 10 and 11, it is thus possible to couple and progressively and selectively move all the bars (3) loaded in the system (100), accumulating them and eliminating all the empty spaces (N) so as to maximize the capacity of the system.

Upon implementation variants of the above embodiments may be developed which do not affect the invention as defined in the appended claims.

Therefore, with reference to the above description and the attached drawings, the following claims are expressed.

## Claims

1. Improved system (100) for handling pieces having a mainly plane geometrical structure, such as panels, doors and windows etc., comprising:
- a bearing structure (1);
- one or more piece-holding bars (3) arranged parallel to a horizontal direction of reference (Y);
- at least one handling structure (2) designed to handle said bars (3) with respect to said bearing structure (1), wherein said handling structure (2) selectively moves one or more of said bars (2) in said translation direction (X),
wherein said handling structure (2) in turn comprises:
- at least one bar thrusting tooth (23) which slides along a sliding guide (21) oriented in said translation direction (X);
- means for selectively translating said at least one bar thrusting tooth (23) along said at least one sliding guide (21) in both directions;
- at least one coupling section (32) directly or indirectly constrained to said piece-holding bar (3), said coupling section (32) being provided with at least one seat (34) for coupling said at least one bar thrusting tooth (23), and wherein said at least one tooth (23) oscillates with respect to said sliding guide (21) between at least one first position of non-interference (A), in which it is not coupled with said coupling section (32), and a second position of interference (B), in which it can be coupled with said coupling section (32), **characterized in that** each piece-holding bar (3) in turn comprises coupling means for hanging one or more pieces to be processed and furthermore sliding with respect to said bearing structure (1) in a horizontal translation direction (X) that is orthogonal to said horizontal direction of reference (Y).

2. System (100) according to the preceding claim, **characterized in that** said handling structure (2) is configured with said means for translating said at least one bar thrusting tooth (23) along said at least one sliding guide (21) with an alternating motion having a predefined stroke.

3. System (100) according to the preceding claims, **characterized in that** said handling structure (2) comprises a plurality of said bar thrusting teeth (23), arranged at a modular distance (D) from one another, and wherein said distance (D) is preferably shorter than said stroke of the alternating translational motion of said teeth (23).

4. System (100) according to the preceding claim, **characterized in that** the distance (D) between said bar thrusting teeth (23) of the same handling structure (2) is fixed and equal to the preferred minimum distance between said piece-holding bars (3).

5. System (100) according to any of the preceding claims, **characterized in that** it comprises two or more of said handling structures (2) distributed on said bearing structure (1) in the direction of reference (Y) on which said piece-holding bars (3) lie.

6. System (100) according to the preceding claims, **characterized in that** each piece-holding bar (3) is constrained so as to make it slide through one or more carriages (31) along at least one sliding bar (22) which is integral with said bearing structure (1) and oriented according to a horizontal translation direction (X) that is orthogonal to said horizontal direction of reference (Y) on which the bars (3) themselves lie.

7. System according to claim 1, **characterized in that** said handling structure (2) comprises:
- said at least one sliding guide (21) arranged in said translation direction (X) and integral with said bearing structure (1);
- a rod or belt (28) which slides in said sliding guide (21);
- one or more of said bar thrusting teeth (23) directly or indirectly hinged to said rod or belt (28), and wherein each of said teeth (23) is normally in said lowered position of interference (B);
- means (27) suited to make said rod or belt (28) slide in both directions along said sliding guide (21).

8. System (100) according to one or more of the preceding claims, **characterized in that** the number and distribution of said coupling sections (32) constrained to each single piece-holding bar (3) correspond to the number and distribution of said handling structures (2).

9. System (100) according to one or more of the preceding claims, **characterized in that** said coupling section (32) and said bar thrusting tooth (23) are shaped with mutual interference surfaces (35, 26) suited to slide on each other, wherein at least one of said interference surfaces (35, 26) is inclined with respect to the horizontal translation direction (X), in such a way that when said tooth (23), normally arranged in said lowered position of interference (B), slides on the section (32) in one direction, it is lifted to said position of non-interference (A) and lowered again at the level of said coupling seat (34), becoming coupled with said coupling section (32).

## Patentansprüche

1. Verbessertes System (100) zum Handhaben von Stücken, die eine im Wesentlichen ebene geometrische Struktur aufweisen, wie Paneelen, Türen und Fenstern usw., umfassend:
- eine Tragstruktur (1);
- eine oder mehrere Stückhaltestangen (3), die parallel zu einer horizontalen Bezugsrichtung (Y) angeordnet sind;
- mindestens eine Handhabungsstruktur (2), die dazu ausgelegt ist, die besagten Stangen (3) in Bezug auf die besagte Tragstruktur (1) zu handhaben, wobei die besagte Handhabungsstruktur (2) wahlweise eine oder mehrere der besagten Stangen (2) in der besagten Translationsrichtung (X) bewegt,
wobei die besagte Handhabungsstruktur (2) wiederum Folgendes umfasst:
- mindestens einen Stangenschubzahn (23), der entlang einer Gleitführung (21), die in der besagten Translationsrichtung (X) ausgerichtet ist, gleitet;
- Mittel zum wahlweisen Verschieben des besagten mindestens einen Stangenschubzahns (23) entlang der besagten mindestens einen Gleitführung (21) in beide Richtungen;
- mindestens einen Kupplungsabschnitt (32), der direkt oder indirekt an der besagten Stückhaltestange (3) befestigt ist, wobei der besagte Kupplungsabschnitt (32) mit mindestens einer Aufnahme (34) zum Koppeln des besagten mindestens einen Stangenschubzahns (23) versehen ist,
und wobei der besagte mindestens eine Zahn (23) in Bezug auf die besagte Gleitführung (21) zwischen mindestens einer ersten Nichteingriffsposition (A), in der er nicht mit dem besagten Kupplungsabschnitt (32) gekoppelt ist, und einer zweiten Eingriffsposition (B), in der er mit dem besagten Kupplungsabschnitt (32) gekoppelt werden kann, schwingt, **dadurch gekennzeichnet, dass** jede Stückhaltestange (3) wiederum Kupplungsmittel zum Aufhängen von einem oder mehreren zu bearbeitenden Stücken und ferner zum Gleiten in Bezug auf die besagte Tragstruktur (1) in einer horizontalen Translationsrichtung (X), die orthogonal zur besagten horizontalen Bezugsrichtung (Y) ist, umfasst.

2. System (100) nach dem vorhergehenden Patenanspruch, **dadurch gekennzeichnet, dass** die besagte Handhabungsstruktur (2) mit den besagten Mitteln zum Verschieben des besagten mindestens einen Stangenschubzahns (23) entlang der besagten mindestens einen Gleitführung (21) mit einer wechselnden Bewegung, die einen vorgegebenen Hub aufweist, konfiguriert ist.

3. System (100) nach den vorhergehenden Patentansprüchen, **dadurch gekennzeichnet, dass** die besagte Handhabungsstruktur (2) eine Vielzahl der besagten Stangenschubzähne (23) umfasst, die in einem modularen Abstand (D) voneinander angeordnet sind, und wobei der besagte Abstand (D) vorzugsweise kürzer ist als der besagte Hub der wechselnden Translationsbewegung der besagten Zähne (23).

4. System (100) nach dem vorhergehenden Patenanspruch, **dadurch gekennzeichnet, dass** der Abstand (D) zwischen den besagten Stangenschubzähnen (23) der gleichen Handhabungsstruktur (2) fest und gleich dem bevorzugten Mindestabstand zwischen den besagten Stückhaltestangen (3) ist.

5. System (100) nach jeglichem der vorhergehenden Patentansprüche, **dadurch gekennzeichnet, dass** es zwei oder mehrere der besagten Handhabungsstrukturen (2) umfasst, die auf der besagten Tragstruktur (1) in der Bezugsrichtung (Y), auf der die besagten Stückhaltestangen (3) liegen, verteilt sind.

6. System (100) nach den vorhergehenden Patentansprüchen, **dadurch gekennzeichnet, dass** jede Stückhaltestange (3) so befestigt ist, dass sie durch einen oder mehrere Schlitten (31) entlang mindestens einer Gleitstange (22) gleitet, die einstückig mit der besagten Tragstruktur (1) ist und gemäß einer horizontalen Translationsrichtung (X) ausgerichtet ist, die orthogonal zur besagten horizontalen Bezugsrichtung (Y) ist, auf der die Stangen (3) selbst liegen.

7. System nach Patentanspruch 1, **dadurch gekennzeichnet, dass** die besagte Handhabungsstruktur (2) Folgendes umfasst:
- die besagte mindestens eine Gleitführung (21), die in der besagten Translationsrichtung (X) angeordnet und einstückig mit der besagten Tragstruktur (1) ist;
- einen Stab oder Riemen (28), der in der besagten Gleitführung (21) gleitet;
- einen oder mehrere der besagten Stangenschubzähne (23), die direkt oder indirekt am besagten Stab oder Riemen (28) angelenkt sind, und wobei sich jeder der besagten Zähne (23) normalerweise in der besagten abgesenkten Eingriffsposition (B) befindet;
- Mittel (27), die dazu geeignet sind, den besagten Stab oder Riemen (28) in beide Richtungen entlang der besagten Gleitführung (21) gleiten zu lassen.

8. System (100) nach einem oder mehreren der vorhergehenden Patentansprüche, **dadurch gekennzeichnet, dass** die Anzahl und Verteilung der besagten Kupplungsabschnitte (32), die an jeder einzelnen Stückhaltestange (3) befestigt sind, der Anzahl und Verteilung der besagten Handhabungsstrukturen (2) entsprechen.

9. System (100) nach einem oder mehreren der vorhergehenden Patentansprüche, **dadurch gekennzeichnet, dass** der besagte Kupplungsabschnitt (32) und der besagte Stangenschubzahn (23) mit gegenseitigen Eingriffsflächen (35, 26) geformt sind, die dazu geeignet sind, aufeinander zu gleiten, wobei mindestens eine der besagten Eingriffsflächen (35, 26) in Bezug auf die horizontale Translationsrichtung (X) so geneigt ist, dass, wenn der besagte Zahn (23), der normalerweise in der besagten abgesenkten Eingriffsposition (B) angeordnet ist, auf dem Abschnitt (32) in eine Richtung gleitet, er in die besagte Nichteingriffsposition (A) angehoben und wieder auf die Höhe der besagten Kupplungsaufnahme (34) abgesenkt wird, wobei er sich mit dem besagten Kupplungsabschnitt (32) koppelt.

## Revendications

1. Système amélioré (100) pour la manipulation de pièces ayant une structure géométrique principalement plane, telles que des panneaux, des portes et des fenêtres, etc., comprenant :
- une structure porteuse (1) ;
- une ou plusieurs barres de maintien des pièces (3) disposées parallèlement à une direction de référence horizontale (Y) ;
- au moins une structure de manipulation (2) conçue pour manipuler lesdites barres (3) par rapport à ladite structure porteuse (1), où ladite structure de manipulation (2) déplace sélectivement une ou plusieurs desdites barres (2) dans ladite direction de translation (X),
où ladite structure de manipulation (2) comprend à son tour :
- au moins une dent de poussée de barre (23) qui coulisse le long d'un guide de coulissement (21) orienté dans ladite direction de translation (X) ;
- des moyens pour déplacer sélectivement ladite au moins une dent de poussée de barre (23) le long dudit au moins un guide de coulissement (21) dans les deux directions ;
- au moins une section de couplage (32) directement ou indirectement contrainte à ladite barre porte-pièces (3), ladite section de couplage (32) étant pourvue d'au moins un siège (34) pour le couplage de ladite au moins une dent de poussée de barre (23),
et où ladite au moins une dent (23) oscille par rapport audit guide de coulissement (21) entre au moins une première position de non-interférence (A), dans laquelle elle n'est pas couplée à ladite section de couplage (32), et une deuxième position d'interférence (B), dans laquelle elle peut être couplée avec ladite section de couplage (32), **caractérisé en ce que** chaque barre porte-pièces (3) comprend à son tour des moyens de couplage pour suspendre une ou plusieurs pièces à traiter et, en outre, glisser par rapport à ladite structure porteuse (1) dans une direction de translation horizontale (X) orthogonale à ladite direction de référence horizontale (Y).

2. Système (100) selon la revendication précédente, **caractérisé en ce que** ladite structure de manipulation (2) est configurée avec ledit moyen de translation de ladite au moins une dent de poussée de barre (23) le long dudit au moins un guide de coulissement (21) avec un mouvement alternatif ayant une course prédéfinie.

3. Système (100) selon les revendications précédentes, **caractérisé en ce que** ladite structure de manipulation (2) comprend une pluralité de dents de poussée de barre (23), disposées à une distance modulaire (D) les unes des autres, et où ladite distance (D) est de préférence plus courte que ladite course du mouvement alternatif de translation desdites dents (23).

4. Système (100) selon la revendication précédente, **caractérisé en ce que** la distance (D) entre lesdites dents de poussée de barre (23) de la même structure de manutention (2) est fixe et égale à la distance minimale préférée entre lesdites barres porte-pièces (3).

5. Système (100) selon l'une quelconque des revendications précédentes, **caractérisé en ce qu'**il comprend deux ou plusieurs desdites structures de manutention (2) réparties sur ladite structure porteuse (1) dans la direction de référence (Y) sur laquelle reposent lesdites barres porte-pièces (3).

6. Système (100) selon les revendications précédentes, **caractérisé en ce que** chaque barre porte-pièces (3) est contrainte de manière à la faire glisser à travers un ou plusieurs chariots (31) le long d'au moins une barre de coulissement (22) solidaire de ladite structure porteuse (1) et orientée selon une direction de translation horizontale (X) orthogonale à ladite direction de référence horizontale (Y) sur laquelle reposent les barres (3).

7. Système selon la revendication 1, **caractérisé en ce que** ladite structure de manutention (2) comprend :
- ledit au moins un guide de coulissement (21) disposé dans ladite direction de translation (X) et solidaire de ladite structure porteuse (1) ;
- une tige ou courroie (28) qui coulisse dans ledit guide de coulissement (21) ;
- une ou plusieurs desdites dents de poussée de barre (23) directement ou indirectement articulées à ladite tige ou courroie (28), et où chacune desdites dents (23) est normalement dans ladite position d'interférence abaissée (B) ;
- des moyens (27) indiqués pour faire coulisser ladite tige ou courroie (28) dans les deux sens le long dudit guide de coulissement (21).

8. Système (100) selon l'une ou plusieurs des revendications précédentes, **caractérisé en ce que** le nombre et la répartition desdites sections de couplage (32) contraintes à chaque barre porte-pièces unique (3) correspondent au nombre et à la répartition desdites structures de manutention (2).

9. Système (100) selon l'une ou plusieurs des revendications précédentes, **caractérisé en ce que** ladite section de couplage (32) et ladite dent de poussée de barre (23) sont galbées avec des surfaces d'interférence mutuelles (35, 26) aptes à coulisser l'une sur l'autre, où au moins une desdites surfaces d'interférence (35, 26) est inclinée par rapport à la direction de translation horizontale (X), de telle sorte que lorsque ladite dent (23), normalement disposée dans ladite position d'interférence abaissée (B), coulisse sur la section (32) dans une direction, elle est soulevée jusqu'à ladite position de non-interférence (A) et abaissée de nouveau au niveau dudit siège de couplage (34), devenant ainsi accouplée avec ladite section de couplage (32).
